Europäisches Patentamt

European Patent Office

Office européen des brevets

(19)

(11) Veröffentlichungsnummer: **0 163 154**
**B1**

(12) # EUROPÄISCHE PATENTSCHRIFT

(45) Veröffentlichungstag der Patentschrift:
**10.01.90**

(51) Int. Cl.⁴: **A 01 M 7/00**

(21) Anmeldenummer: **85105276.1**

(22) Anmeldetag: **30.04.85**

(54) Spritzvorrichtung zum Ausbringen von flüssigen Spritzmitteln.

(30) Priorität: 30.05.84 DE 3420130
14.03.85 DE 3509040

(43) Veröffentlichungstag der Anmeldung:
**04.12.85 Patentblatt 85/49**

(45) Bekanntmachung des Hinweises auf die Patenterteilung:
**10.01.90 Patentblatt 90/2**

(84) Benannte Vertragsstaaten:
**AT BE CH DE FR GB IT LI LU NL SE**

(56) Entgegenhaltungen:
BE-A- 29 531
DE-C- 493 229
GB-A- 943 800

(73) Patentinhaber: **Lehner, Karl, Krankenhausstrasse 74,
D-8406 Sünching (DE)**

(72) Erfinder: **Lehner, Karl, Krankenhausstrasse 74,
D-8406 Sünching (DE)**

(74) Vertreter: **Graf, Helmut, Dipl.-Ing. et al, Patentanwälte
Dipl.-Ing. A. Wasmeier Dipl.-Ing. H. Graf Greflinger
Strasse 7 Postfach 382, D-8400 Regensburg (DE)**

ACTORUM AG

## Beschreibung

Die Erfindung bezieht sich auf eine Spritzvorrichtung zum Ausbringen von flüssigen Spritzmitteln, z.B. von Düngemitteln und/oder Unkrautvernichtungsmitteln und/oder Pflanzenschutzmitteln auf Kulturen hochständiger Pflanzen, bestehend aus einem an einem Fahrzeug befestigbaren Spritzenträger sowie aus einem am Spritzenträger einstellbar gehalterten horizontalen, sich senkrecht zur Fahrtrichtung des Fahrzeuges erstreckenden, ein Spritzengestänge bildenden Ausleger mit einer Vielzahl von an diesem Ausleger vorgesehenen Düsen, deren Austrittsöffnungen mit ihren die Düsenrichtung bestimmenden Achsen bei Gebrauch der Vorrichtung senkrecht oder in etwa senkrecht nach unten gerichtet sind, wobei eine über die Düsen in Düsenrichtung nach unten vorstehenden Umlegerkante vorgesehen ist, die sich über die Länge des Auslegers und dabei ebenfalls quer bzw. senkrecht zur Fahrtrichtung des Fahrzeuges erstreckt und die Fahrtrichtung des Fahrzeuges vor den Düsen angeordent ist.

Zum Ausbringen von flüssigen Spritzmitteln der unterschiedlichsten Art werden in der Landwirtschaft u.a. Spritzvorrichtungen verwendet, die aus einem Fahrzeug (in der Regel Schlepper) befestigbaren Spritzenträger sowie aus einem an dem Spritzenträger einstellbar gehaltertern horizontalen, sich senkrecht zur Fahrtrichtung des Fahrzeuges erstreckenden Ausleger in Form eines Spritzengestänges mit einer Vielzahl von dort vorgesehenen Düsen bestehen, deren Austrittsöffnungen mit ihren die Düsenrichtung bestimmenden Achsen senkrecht oder in etwa senkrecht nach unten gerichtet sind. Da die Ausleger dieser Spritzvorrichtungen eine grosse Länge aufweisen, die die für ein Fahren auf öffentlichen Wegen und Strassen maximal zulässige Breite des Fahrzeuges weit überschreitet, besteht der Ausleger solcher Spritzvorrichtungen in der Regel aus mehreren, über Gelenke miteinander verbundenen Abschnitten, so dass der Ausleger für den Nichtgebrauch zusammengeklappt werden kann. Diese Spritzvorrichtungen haben u.a. den Nachteil, dass insbesondere bei hochständigen Pflanzen, d.h. bei Pflanzen, die einen hohen Wuchs aufweisen, wie dies z.B. bei Getreidearten, aber auch bei anderen Nutzpflanzen, wie beispielsweise Kartoffeln der Fall ist, das ausgebrachte Spritzmittel nur zum Teil dorthin gelangt, wo es tatsächlich benötigt wird. Dies gilt beispielsweise bei auf den Boden auszubringenden Unkrautvernichtungsmitteln sowie bei Düngemitteln, die in dem Boden eingebracht werden sollen. Dies gilt aber auch für solche Mittel, die als Pflanzenschutzmittel oder Düngemittel auf die Pflanzen selbst aufgebracht werden müssen. Bei Verwendung der bekannten Spritzvorrichtungen bleiben diese Mittel hauptsächlich auf dem oberen Bereich der hochständigen Pflanzen bzw. auf den dortigen Blättern haften. Dies bedeutet z.B., dass die verwendeten Mittel in grösserer Menge oder aber wiederholt ausgebracht werden müssen, um die gewünschte Wirkung zu erhalten, was dann zu Beschädigungen der Pflanzen, vor allem aber auch zu einer Schädigung des Bodens und der Umwelt allgemein durch einen überhöhten Einsatz der verwendeten Mittel führt.

Bekannt (DE-C 493 229) ist weiterhin eine Spritzvorrichtung mit einem sich senkrecht zur Fahrtrichtung des Fahrzeuges erstreckenden Ausleger, der allerdings nicht zusammenklappbar ist und an dem eine Vielzahl von Düsen vorgesehen sind, wobei bei dieser bekannten Spritzvorrichtung unterhalb des Auslegers und damit unterhalb der Düsen mehrere, ebenfalls senkrecht zur Fahrtrichtung verlaufende, parallel zu und im Abstand voneinander angeordnete Wendestäbe vorgesehen sind, die sich über die gesamte Länge des Auslegers erstrecken und von denen ein Wendestab in Fahrtrichtung des Fahrzeuges vor den Düsen angeordnet ist. Beim Ausbringen des Spritzmittels werden hochständige Pflanzen durch die von den Wendestäben gebildeten Umlegerkanten umgelegt, so dass mit dem eingesetzten Spritzmittel zumindest eine effektivere Behandlung der hochständigen Pflanzen und insoweit auch eine Reduzierung der Spritzmittelkosten sowie der Umweltbelastung möglich ist.

Alle bekannten Spritzvorrichtungen haben auch den Nachteil, dass beim Ausbringen eines Spritzmittels dieses zum Teil durch Wind vertragen wird, was nicht nur einen erhöhten Einsatz an Spritzmitteln erforderlich macht und auch zu Umweltbelastung beiträgt, sondern vor allem auch ein erhebliches gesundheitliches Risiko für den Benutzer der Spritzvorrichtung darstellt.

Aufgabe der Erfindung ist es, eine Spritzvorrichtung der eingangs erwähnten Art dahingehend weiterzubilden, dass sie bei optimierten Einsatz der verwendeten Menge an Spritzmittel auch zu einer erheblichen Reduzierung gesundheitlicher Risiken beiträgt.

Zur Lösung dieser Aufgabe ist eine Spritzvorrichtung der eingangs geschilderten Art erfindungsgemäss gekennzeichnet durch eine erste Wandung, die am Ausleger an seiner in Fahrtrichtung des Fahrzeuges vor den Düsen liegenden Seite vorgesehen ist.

Die erfindungsgemässe Spritzvorrichtung gestattet einen sehr effektiven Einsatz des verwendeten Spritzmittels, wobei die Spritzmittelkosten reduziert und auch eine unnötige Belastung der Pflanzen und Umwelt durch Spritzmittel vermieden wird. Die erfindungsgemässe Spritzvorrichtung hat aber insbesonders auch den Vorteil, dass gesundheitliche Risiken für den Benutzer beim Ausbringen des Spritzmittels erheblich reduziert werden. Da die Umlegerkante, die bei der erfindungsgemässen Spritzvorrichtung beispielsweise von der Aussenfläche eines stab- oder stangenförmigen Umlegers gebildet ist, in Fahrtrichtung des Fahrzeuges vor den Düsen angeordnet ist, werden beim Ausbringen des Spritzmittels aufgrund der Fahrbewegung des die Spritzvorrichtung aufweisenden Fahrzeuges jeweils nur solche Pflanzen umgelegt, die sich in Fahrtrichtung des Fahrzeuges vor den Düsen befindet, so dass das Spritzmittel aus den Düsen in den unter diesen befindlichen und von den umgelegten Pflanzen freigegenen Raum eingebracht werden kann. Hierdurch wird erreicht, dass solches Spritzmittel, welches auf den Boden gelangen soll, auch dort durch die Pflanzen ungehindert auftrifft. Weiterhin ist sichergestellt, dass solches Spritzmittel, welches auf die Pflanzen selbst gelangen soll, die Pflanzen zumindest auf einer Seite auf voller Höhe von oben bis unten in nahezu gleichmässiger Weise benetzt.

Dadurch, dass bei der erfindungsgemässen Spritzvorrichtung die Umlegerkante in Fahrtrichtung des Fahrzeuges vor den Düsen angeordnet ist, wird weiterhin auch erreicht, dass die Pflanzen nach dem Freikommen von der Umlegerkante eine schaukelnde bzw. pendelnde Bewegung dann ausführen, wenn sich diese Pflanzen noch im Wirkungsbereich der Düsen befindet, so dass aufgrund dieser pendelnden Bewegung die Pflanzen auch auf der anderen Seite von dem Spritzmittel erfasst werden, was ebenfalls zu einer Optimierung des Spritzmitteleinsatzes beiträgt. Da das Einspritzen des Spritzmittels bei der erfindungsgemässen Spritzvorrichtung in den von den umgelegten Pflanzen freigegebenen Raum erfolgt, der zum Fahrzeug hin, d.h. im Bereich der umgelegten Pflanzen durch die «erste» Wandung und zu der dem Fahrzeug abgewandten Seite im wesentlichen durch die wieder aufgerichteten Pflanzen abgeschirmt ist, wird wirksam auch verhindert, dass Spritzmittel durch Wind vertragen werden kann. Dies führt ebenfalls zu einer Reduzierung der erforderlichen Menge an Spritzmittel, vor allem aber zu einer Reduzierung der gesundheitlichen Risiken für den Benutzer der Spritzvorrichtung.

Bei einer bevorzugten Ausführungsform der erfindungsgemässen Spritzvorrichtung, bei der der Ausleger für den Nichtgebrauch zusammenklappbar ausgebildet ist, d.h. aus mehreren gelenkig miteinander verbundenen Abschnitten besteht, ist zusätzlich zu der ersten Wandung eine zweite Wandung vorgesehen, die beim Gebrauch der Vorrichtung über den Düsen angeordnet ist und zusammen mit den Düsen an Elementen befestigt ist, die um eine Achse parallel zur Längserstreckung des Auslegers an dessen Abschnitten angelenkt sind. Durch diese zweite Wandung ergibt sich eine weitere Abschirmung des von den Düsen gebildeten Spritzbereiches auch nach oben. Durch die gelenkige Verbindung der Düsen sowie der zweiten Wandung mit den Abschnitten des Auslegers ist es trotz dieser zweiten Wandung möglich, den Ausleger für den Nichtgebrauch zusammenzuklappen, und zwar dadurch, dass vor dem Zusammenklappen des Auslegers jeweils erst die Düsen und die zweite Wandung auf den jeweiligen Abschnitt des Auslegers geklappt werden.

Weiterbildungen der Erfindung sind Gegenstand der Unteransprüche. Die Erfindung wird im folgenden anhand der Figuren an Ausführungsbeispielen näher erläutert. Es zeigen:

Fig. 1 in Seitenansicht einen als Spritzfahrzeug dienenden Schlepper zusammen mit der am Geräteträger bzw. an der Drei-Punkt-Aufhängung des Schleppers befestigten Spritzvorrichtung;

Fig. 2 den Schlepper gemäss Fig. 1 in Rückansicht zusammen mit der Spritzvorrichtung, wobei letztere der einfacheren Darstellung wegen nur in ihren rechten Teil vollständig dargestellt ist;

Fig. 3 in vergrösserter Darstellung einen Schnitt entsprechend der Linie I-I der Fig. 2;

Fig. 4 in vergrösserter Darstellung einen Schnitt wie Fig. 3, jedoch bei einer abgewandelten Ausführungsform;

Fig. 5 in vergrösserter Darstellung das eine Ende des Auslegers der Ausführungsform gemäss Fig. 4;

Fig. 6 eine Draufsicht als den als Spritzfahrzeug dienenden Schlepper sowie auf den Aufleger bei der Ausführungsform nach den Fig. 4 und 5.

In den Figuren ist 1 eine landwirtschaftliche Zugmaschine, nämlich ein Schlepper herkömmlicher Bauart, der eine Ladefläche aufweist, auf welcher ein Behälter 2 zur Aufnahme eines flüssigen Spritzmittels montiert ist, welches auf eine Kultur hochständiger Pflanzen 3 ausgebracht werden soll. In den Figuren sind die Pflanzen 3 als Getreide dargestellt. Die Pflanzen 3 können jedoch auch andere hochständige Nutzpflanzen, wie beispielsweise Kartoffeln usw. sein.

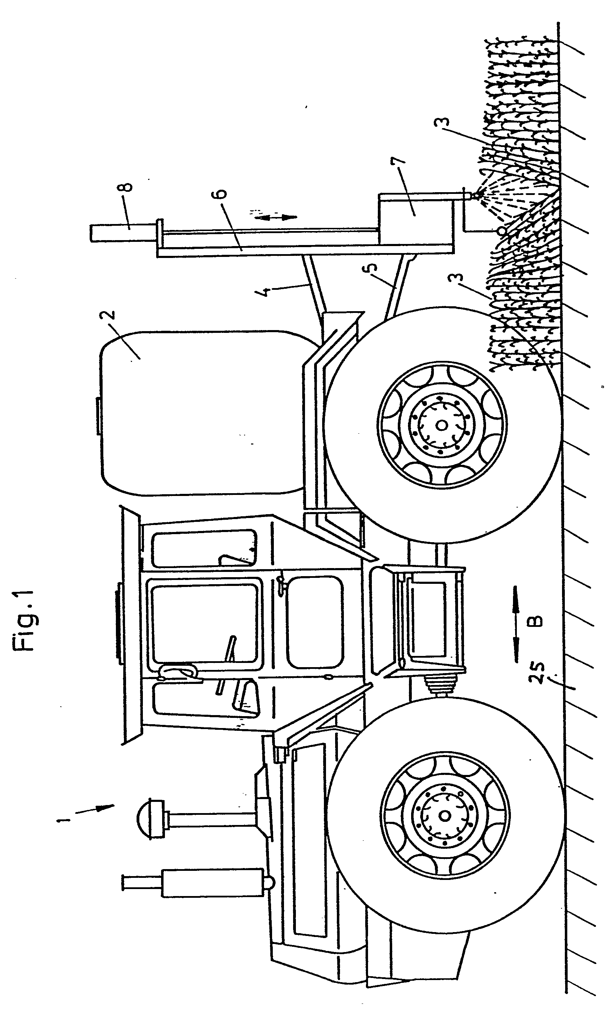

Am Geräteträger bzw. an der Drei-Punkt-Aufhängung bzw. an den Armen 4 und 5, die diese Drei-Punkt-Aufhängung bilden und die an der Rückseite eines Schleppers üblicher Ausbildung bereits vorhanden sind, ist ein rahmenartiger Spritzenträger 6 gehalten, an welchem in vertikaler Richtung, d.h. in Richtung des Doppelpfeiles A der Fig. 1 ein Tragrahmen 7 verschiebbar geführt ist, welcher mit Hilfe einer Hubeinrichtung 8, die beispielsweise von einer hydraulischen Kolben-Zylinder-Anordnung gebildet ist, in vertikaler Richtung (Doppelpfeil A) auf- und abbewegt werden kann. Am Tragrahmen 7 ist um einen Gelenkbolzen 9, dessen Achse in horizontaler Richtung und in Richtung der Längsachse des Schleppers 1 (Doppelpfeil B der Fig. 1) verläuft ein fachwerkartiger Ausleger 10 in seinem mittleren Bereich schwenkbar befestigt, wobei sich dieser Ausleger mit gleicher Länge über die beiden Längsseiten des Schleppers 1 senkrecht zur Längsachse diese Schleppers erstreckt. Da der Ausleger mit dem Gelenkbolzen 9 etwas oberhalb des Schwerpunktes angelenkt ist, den der Ausleger 10 einschliesslich der an diesem Anleger befestigten und weiter unten noch beschriebenen Elemente aufweist, stellt sich der Ausleger 10 immer selbsttätig in eine horizontale Lage ein, und zwar auch dann, wenn der Schlepper 1 um seine Längsachse geneigt bzw. schäg steht. Durch nicht näher dargestellte Anschläge ist das Schwenken des Auslegers 10 um die Achse des Gelenkbolzens 9 auf einen vorgegebenen Winkelbereich begrenzt.

Durch die Verwendung einer zusätzlichen Betätigungseinrichtung 11, die beispielsweise ebenfalls von einer hydraulisch betätigbaren Kolben-Zylinder-Anordnung gebildet ist und die zwischen dem Tragrahmen 7 und dem Ausleger 10 wirkt, ist es allerdings auch möglich, den Ausleger 10 zwangsweise bzw. gesteuert um die Achse des Gelenkbolzens 9 gegenüber dem Tragrahmen 7 bzw. dem Spritzenträger 6 und damit gegenüber dem Schlepper 1 zu schwenken.

Der Ausleger 10 besteht aus mehreren Abschnitten, die bei der dargestellten Ausführungsform jeweils gleiche Länge aufweisen, und zwar aus dem mittleren Abschnit 10', der unmittelbar am Tragrahmen 7 angelenkt ist, sowie aus den Abschnitten 10'', 10''' und 10'''', die sich jeweils an beiden Seiten des mittleren Abschnittes 10' an diesen anschliessen. Die Abschnitte 10'', 10''' und 10'''' sind untereinander über Gelenke 12 gelenkig miteinander verbunden. Jeder Abschnitt 10'' ist weiterhin über in Gelenk 13 an einer Seite des mittleren Abschnittes 10' angelenkt, so dass sämtliche Abschnitte des Auslegers 10 durch Schwenken um die vertikalen Achsen der Gelenke 12 bzw. 13 ziehharmonikaartig derart aufeinander geklappt bzw. aufeinander gelegt werden können, dass beim Fahren des Schleppers 1 auf normalen Fahrwegen bzw. Strassen sich der gesamte Ausleger 10 im zusammengeklappten Zustand an der Rückseite des Schleppers 1 befindet und seitlich über dem Schlepper 1 nur soweit vorsteht, wie dies durch die Länge eines Abschnittes vorgegeben ist.

Jeder Abschnitt 10', 10'', 10''' bzw. 10'''' des Ausleger 10 besteht aus einer oberen Längs-Gurtung 14 zur Aufnahme von Zugkräften sowie aus einer unteren Längs-Gurtung 15 zur Aufnahme von Druckkräften, wobei zumindest die untere Gurtung 15 als Rohr ausgebildet ist, an dessen Unterseite jeweils eine Vielzahl von Spritzdüsen 16 angeordnet sind und über welches die Spritzflüssigkeit zu diesen Düsen zugeführt wird, und zwar mit Hilfe einer die Spritzflüssigkeit aus dem Behälter 2 fördernden Pumpe. Die die untere Gurtung bildenden Rohre 15 sind im Bereich der Gelenke 13 bzw. 12 geschlossen und stehen im Bereich dieser geschlossenen Enden bzw. im Bereich der Gelenke 12 und 13 über nicht näher dargestellte Verbindungsschläuche miteinander in Verbindung, so dass die Zuführung des flüssigen Spritzmittels an sämtliche Düsen 16 gewährleistet ist. Die Gurtungen 14 und 15 sind durch mehrere Quergurte 17 zu der fachwerkartigen, im wesentlichen in einer vertikalen Ebene liegenden Rahmenstruktur des Ausleger 10 miteinander verbunden.

Die Düsen 16 sind an den Rohren 15 derart angeordnet, dass die Austrittsöffnung dieser Düsen mit ihrer Achse in vertikaler Richtung liegen, d.h. die Wirkungsrichtung dieser Düsen entsprechend dem Pfeil C in Form eines Kegels von oben nach unten verläuft. And den Rohren 15 ist ein stabförmiger Umleger 18 gehalten, und zwar mit Hilfe einer Vielzahl von rechtwinklig abgewinkelten Haltearmen 19, die jeweils mit einem horizontalen, d.h. senkrecht zur Ebene der fachwerkartigen Struktur des Auslegers 10 verlaufenden Schenkel 19' an den Rohren 15 befestigt sind und an einem in vertikaler Richtung verlaufenden Schenkel mit dem Umleger 18 verbunden sind. Die Befestigung der Haltearme 19 an den einen quadratischen Querschnitt aufweisenden Rohren 15 erfolgt bei der dargestellten Ausführungsform dadurch, dass jeder Schenkel 19' an seinem dem Schenkel 19'' entfernt liegenden Ende ein gabelartiges Verbindungsstück 20 trägt, welches zwei über ein Jochstück 21 miteinander verbundenen Gabelarme 22 aufweist, mit denen jeder Haltearm 19 auf ein Rohr 15 aufgeschoben ist und die das Rohr 15 gabelartig übergreifen. Eine Sicherungbzw. Klemmschraube 23 dient zum Festklemmen des Haltearmes 19 an dem betreffenden Rohr 15. Der stabförmige Umleger 18, der mit seiner Aussenfläche eine abgerundete Umlegerfläche bildet, erstreckt sich über die gesamte Länge des Auslegers 10 und besteht bei der dargestellten Ausführungsform aus mehreren Abschnitten 18', die jeweils im Bereich der Gelenke 12 bzw. 13 enden und dort durch biegsame bzw. elastisch verformbare Verbindungsstücke 24 miteinander verbunden sind, so dass die Abschnitte 18' zusammen mit den Verbindungsstücken 24 den sich über die gesamte Länge des Auslegers erstreckenden, durchgehenden Umleger 18 bilden. Durch die Verbindungsstücke 24 ist es möglich, den Ausleger ohne Abnehmen des Umlegers 18 in der oben beschriebenen Weise zusammenzuklappen, um mit dem Schlepper 1 auf einem normalen Fahrweg bzw. auf einer normalen Strasse fahren zu können. Die einzelnen Abschnitte 18' des Umlegers 18 sind beispielsweise wieder Rohrstücke.

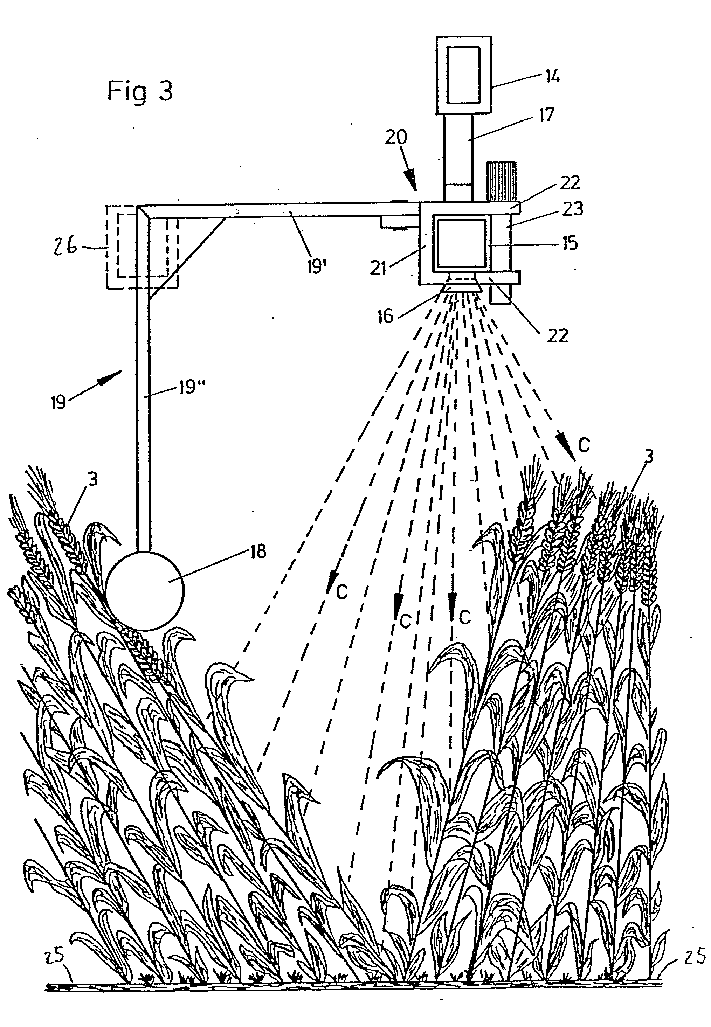

Wie die Figuren 1 und 3 zeigen, erstrecken sich die Schenkel 19' vom Rohr 15 in Fahrtrichtung des Schleppers nach vorne, so dass der Umleger 18 bezogen auf die Fahrtrichtung des Schleppers den Düsen 16 voreilt. Gleichzeitig besitzen die vertikalen Schenkel 19'' eine solche Länge, dass sich der Umleger 18 auch unterhalb der Düsen 16 befindet. Bei einer bevorzugten Ausführungsform beträgt der Abstand des Umlegers 18 von den Düsen 16 in horizontaler Richtung beispielsweise 20,5 cm, wobei der Abstand des stabförmigen Umlegers 18 von dem horizontalen Schenkel 19' ungefähr 23,5 mm ist.

Zum Ausbringen der Spritzflüssigkeit, die beispielsweise ein Düngemittel, ein Unkrautvernichtungsmittel oder ein Pflanzenschutzmittel oder aber eine Mischung zweier oder mehrerer dieser Mittel ist, wird mit Hilfe der Hubeinrichtung die Höhenlage des Auslegers 10 so eingestellt, dass der Umleger 18 den oberen Bereich der Pflanzen 3 erfasst, wie dies in den Figuren 1 und 3 dargestellt ist. Wird nun der Schlepper 1 bei gleichzeitigem Ausbringen des Spritzmittels aus den Düsen 16 in Bewegung gesetzt, so werden die Pflanzen 3 von dem Umleger 18 zunächst in Fahrtrichtung des Schleppers 1 umgelegt und führen dann anschliessend (nach dem Freikommen vom Umleger 18) eine pendelnde bzw. schaukelnde Bewegung aus. Vor allem durch das Umlegen der Pflanzen 3 wird zunächst sicher gestellt, dass das aus den Düsen 16 austretende Spritzmittel bis unmittelbar auf den Boden 25 gelangen kann, was insbesondere beim Ausbringen solcher Mittel, die auf den Boden bzw. in den Boden eingebracht werden müssen (z.B. Unkrautvernichtungsmittel, in den Boden einzubringende Düngemittel sowie ev. Pflanzenschutzmittel) bedeutet, dass diese Mittel tatsächlich hauptsächlich dorthin gelangen, wo sie benötigt werden und nicht etwa zum grössten Teil an den Blättern der hochständigen Pflanzen 3 haften bleibt.

Das Umlegen der Pflanzen 3 mit Hilfe des Umlegers 18 sowie die sich hieran anschliessende pendelnde oder schaukelnde Bewegung der Pflanzen 3 hat weiterhin den Vorteil, dass die Pflanzen 3 beidseitig und auf voller Höhe von oben bis unten sehr gleichmässig mit solchen Mitteln benetzt werden können, die wie beispielsweise Pflanzenschutzmittel (beispielsweise Mittel gegen Pilzbefall oder Schädlinge) oder aber auf die Pflanzen aufzubringende und von diesen mit ihren über den Boden vorstehenden Teilen aufgenommene Düngemittel auf die Pflanzen 3 aufgebracht werden.

Weiterhin hat der Umleger 18 den Vorteil, dass die Düsen 16 hauptsächlich in einen durch den Umleger 18 freigelegten Bereich spritzen, so dass sich auch bei Wind ein weit geringerer Abtrieb des Spritzmittels beim Ausbringen ergibt.

Darüber hinaus bietet der Umleger 18 auch einen mechanischen Schutz der Düsen 16 gegen Beschädigung durch nach oben vorstehende Bereiche unebenen Geländes.

Insgesamt ermöglicht es die erfindungsgemässe Ausbildung, mit einer geringeren Menge an Spritzmittel die gleiche Wirkung zu erzielen, die bisher nur unter Einsatz einer wesentlich grösseren Menge an Spritzmittel möglich war. Mit der erfindungsgemässen Ausbildung können gegenüber herkömmlichen Spritzvorrichtungen bis zu 40% an Spritzmittel eingespart werden. Dies stellt eine ganz erhebliche Kostenersparnis, aber vor allem auch eine ganz erhebliche Reduzierung der Umweltbelastung dar.

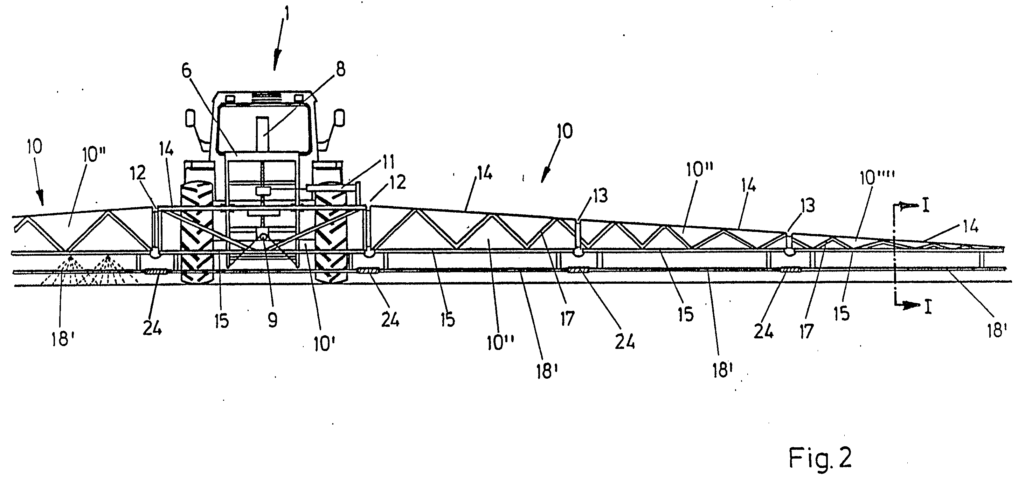

Bei der voranstehend beschriebenen Ausführung nach den Fig. 1–3 ist es grundsätzlich auch möglich, den Umleger 18 als tragenden Teil, nämlich als Untergurtung des Auslegers 10 auszubilden und diesen Ausleger dann über Quergurte mit einem Obergurt zu verbinden, wie dies in der Fig. 3 bei 26 mit unterbrochenen Linien angedeutet ist, wobei in diesem Fall anstelle der Schenkel 19″ die Quergurte treten. Die die Düsen 16 aufweisenden Rohre 15 sind dann über Arme, die beispielsweise den Schenkel 19′ entsprechen an dem von dem Umleger 18 und der oberen Längsgurtung 26 gebildeten fachwerkartigen Ausleger 10 gehalten.

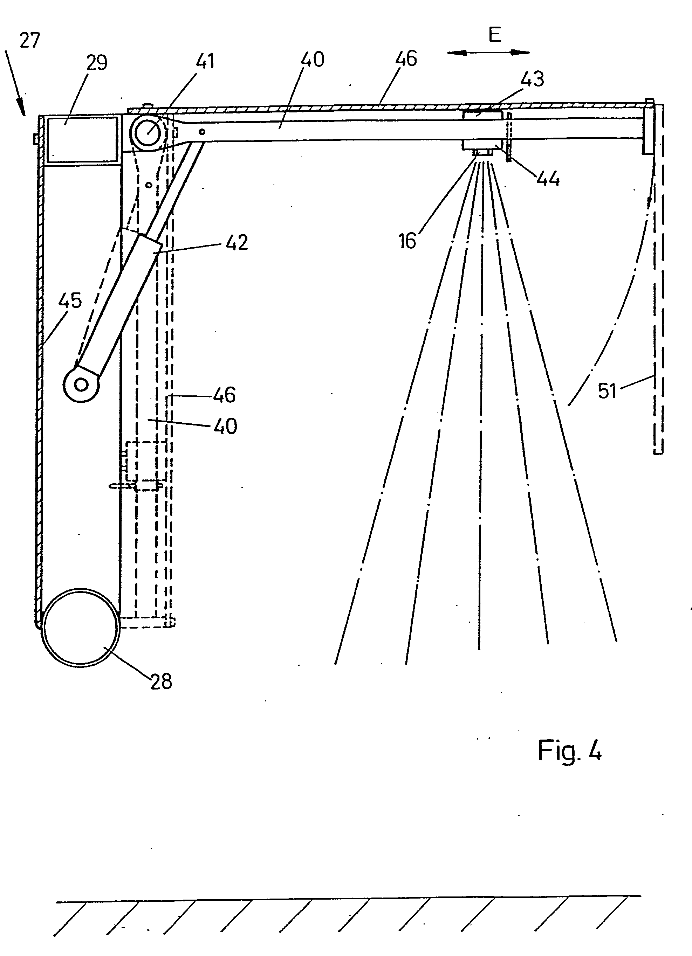

In den Fig. 4–6 ist eine Ausführung dargestellt, bei der der in ähnlicher Weise wie der Ausleger 10 an dem Schlepper 1 befestigte fachwerkartige Ausleger 27 von mehreren, bei einsatzbereiter Spritzvorrichtung in horizontaler Richtung achsgleich miteinander liegenden und aneinander anschliessenden unteren Rohrstücken 28 als unterer Längsgurt und von mehreren aneinander anschliessenden Rechteck-Hohlprofilen 29 als oberer Längsgurt gebildet ist. Die Rohrstücke 28 und Hohlprofile 29 sind durch mehrere, nicht näher dargestellte Quergurte (entsprechend den Schenkel 19″ der Fig. 3) miteinander verbunden. Die in vertikaler Richtung unter den Hohlprofilen 29 angeordneten Rohrstücke 28 dienen bei dieser Ausführung wieder als Umleger für die hochständigen Pflanzen 3, und zwar in gleicher Weise, wie dies im Zusammenhang mit der Fig. 1–3 bereits erörtert wurde.

Bei der in den Fig. 4–6 dargestellten Ausführungsform besteht der Ausleger aus insgesamt fünf Abschnitten, nämlich aus dem mittleren Abschnitt 27′, der in gleicher Weise wie der mittlere Abschnitt 10′ am Schlepper 1 bzw. an dem dort vorgesehenen Tragrahmen 7 mittels des Gelenkbolzens 9 angelenkt ist, aus zwei Abschnitten 27″, die sich unmittelbar an den Abschnitt 27′ beidendig anschliessen sowie aus den beiden äusseren Abschnitten 27‴, von denen sich jeder an einen Abschnitt 27″ anschliesst. Jeder Abschnitt 27′, 27″, 27‴ ist in der voranstehend bereits beschriebenen Weise fachwerkartig ausgebildet, und zwar unter Verwendung eines Rohrstückes 28 als Untergurt und eines Hohlprofiles 29 als Obergurt sowie unter Verwendung der nicht dargestellten Quergurte.

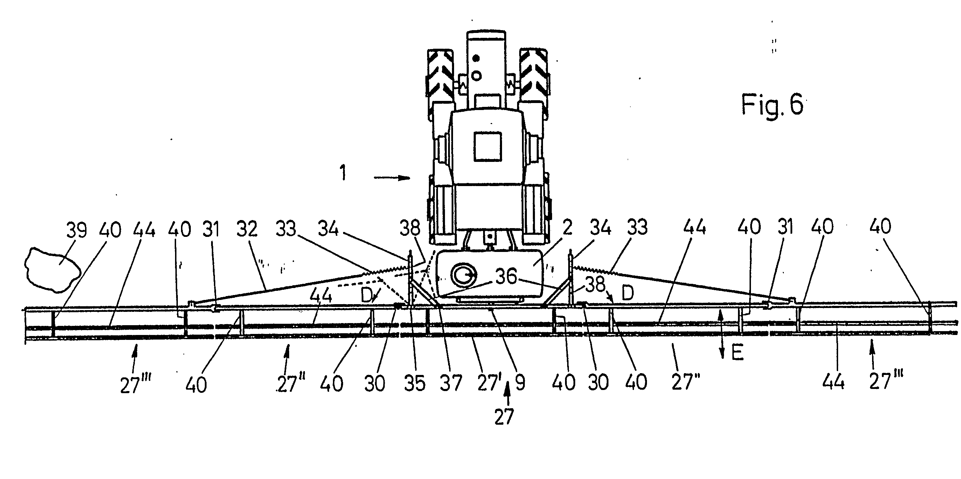

Die Abschnitte 27″ sind jeweils um eine vertikale Achse, d.h. um eine Achse schwenkbar, die senkrecht zur Längserstreckung des Auslegers 27 sowie parallel zu einer gedachten Verbindungslinie zwischen den Rohrstücken 28 und den Hohlprofilen 29 verläuft. Für diese schwenkbare Verbindung sind die Abschnitte 27″ an den Enden des Abschnittes 27′ jeweils mit Hilfe wenigstens eines Gelenkbolzens 30 angelenkt. Durch diese gelenkige Verbindung ist es möglich, die Abschnitte 27″ aus ihrer in der Fig. 6 dargestellten Lage nach rückwärts zu schwenken, wie dies mit den Pfeilen D in der Fig. 6 angedeutet ist. Abweichend von der mehr schematischen Darstellung in der Fig. 6 ist in der Praxis die Anordnung der Gelenkbolzen 30 so gewählt, dass bei vollständig nach hinten geschwenkten Abschnitten 27′ beispielsweise der in de Fig. 6 dargestellte linke Abschnitt 27″ nach dem Schwenken aus seiner in der Fig. 6 dargestellten Lage um 180° in Richtung des Pfeiles D unmittelbar gegen den mittleren Abschnitt 27′ anliegt, während der in der Fig. 6 rechte Abschnitt 27″ nach seinem vollständigen Schwenken in Richtung des Pfeiles D (um 180° aus der in der Fig. 6 dargestellten Lage) gegen den um 180° geschwenkten linken Abschnitt 27″ anliegt. Die beiden äusseren Abschnitte 27‴ sind jeweils mit Hilfe wenigstens eines Gelenkbolzens 31 um eine horizontale Achse, d.h. um eine Achse parallel zur Achse des Gelenkbolzens 9 an den Abschnitten 27″ schwenkbar gehalten, so dass nach dem Schwenken um 180° aus der in der Fig. 6 gezeigten Lage jeder Abschnitt 27‴ auf einem Abschnitt 27′ aufliegt. Auf diese Weise ist es möglich, den Ausleger 27 auf eine effektive Länge zusammenzuschwenken, die (Länge) im wesentlichen der Länge des mittleren Abschnittes 27' entspricht, so dass bei zusammengeklapptem Ausleger 27 ein Fahren des Schleppers 1 auf Strassen bzw. Wegen möglich ist.

Durch die beschriebene schwenkbare Verbindung der Abschnitte 27" mit dem Abschnitt 27' ist es weiterhin möglich, dass die Enden des Auslegers 27 (durch Schwenken um die Gelenkbolzen 30) ev. Hindernissen ausweichen können. Für diesen Zweck sind keine festen Verriegelungen vorgesehen, die die Abschnitte 27' und 27" bei aufgeklapptem Ausleger 27 gegeneinander verriegeln, sondern die Abschnitte 27" sind bei ausgeklapptem Ausleger 27' federnd in der in der Fig. 6 dargestellten Lage gehalten. Hierfür sind Seile 32 vorgesehen, die jeweils an einem Ende an der dem Schlepper 1 zugewendeten Vorderseite eines Abschnittes 27''' befestigt sind und von denen jedes mit seinem anderen Ende an einem Ende einer Zugfeder 33 befestigt ist, die mit ihrem anderen Ende an einem Hebel 34 gehalten ist, und zwar derart, dass das an dem Hebel 34 befestigte Ende der Zugfeder 33 mit Abstand vor der dem Schlepper 1 zugewendeten Vorderseite des Auslegers 27 liegt. Jeder Hebel 34 ist um eine parallel zur Achse der Gelenbolzen 30 verlaufende Achse, d.h. mit Hilfe eines Gelenkbolzens 35 an einem Ende am mittleren Abschnitt 27' schwenkbar befestigt. Durch mehr oder weniger starkes Schwenken des Hebels 34 kann die an diesem Hebel gehaltene Zugfeder 33 mehr oder weniger stark gespannt werden, wie dies in der Fig. 6 für den dortigen linken Hebel 34 mit unterbrochenen Linie angedeutet ist. Um den jeweiligen Hebel 34 in einer vorgegebenen Schwenkstellung zu arretieren, ist für jeden Hebel 34 am mittleren Abschnitt 27' ein Hilfshebel 36 vorgesehen, der an einem Ende mit Hilfe eines Gelenkbolzens 37 um eine vertikale Achse schwenkbar am Abschnitt 27' befestigt ist und am anderen Ende mit Hilfe eines Bolzens in vorbereiteten, eine Lochreihe bildenden Löchern 38 am Hebel 34 befestigt werden kann. Je nachdem, welches Loch 38 für die Verbindung mit dem Hilfshebel 36 ausgewählt wird, wird der Hebel 34 in einer die Zugfeder 33 mehr oder weniger stark spannenden Stellung arretiert.

Läuft nun beispielsweise das in der Fig. 6 linke Ende des Auslegers 27 beim Spritzen gegen ein Hindernis 39 an, so wird der Ausleger 27 in seinem linken Teil durch Schwenken um den Gelenkbolzen 30 und unter zunehmendem Spannen der Zugfeder 33 nach hinten geschwenkt und kann auf diese Weise dem Hindernis 39 ausweichen. Nach dem Vorbeibewegen am Hindernis 39 wird der Ausleger durch die Zugfeder 33 wieder in seine in der Fig. 6 dargestellte Lage zurückgeführt, wobei selbstverständlich durch entsprechende Anschläge im Bereich der Gelenkverbindungen zwischen dem Abschnitt 27' und den Abschnitten 27" dafür gesorgt ist, dass die Abschnitte 27" über die in der Fig. 6 gezeigten Lage nicht nach vorne schwenken können.

Wie die Fig. 4 und 6 zeigen, sind an jedem Abschnitt 27', 27" bzw. 27''' jeweils zwei Arme 40 im Abstand voneinander vorgesehen, die mit ihrer Längserstreckung parallel sowie senkrecht zur Längserstreckung des Auslegers 27 liegen. Die beiden Arme 40, von denen sich jeweils einer im Bereich eines Endes des betreffenden Abschnittes befindet, sind an einem Ende an dem oberen Hohlprofil 29 mit Hilfe eines Gelenkbolzens 41 um eine in Richtung der Längserstreckung des Auslegers 27 verlaufende Achse schwenkbar gehalten, und zwar an der dem Schlepper 1 abgewendeten Rückseite der Hohlprofile 29. Mit Hilfe einer pneumatisch, vorzugsweise jedoch hydraulisch betätigbaren Kolben-Zylinder-Anordnung 42 ist jeder Arm 40 aus einer nach unten geklappten Stellung, in der das freie Ende dieses Armes an dem Rohrstück 28 anliegt und der Arm mit seiner Längserstreckung in vertikaler Richtung verläuft, um den Gelenkbolzen 41 in eine Stellung klappbar, in der der Arm 40 mit seiner Längserstreckung in horizontaler Richtung liegt.

An den beiden Armen 40 jedes Abschnittes 27', 27", 27''' ist mit Führungselementen 43 ein Rohrstück 44 senkrecht zu seiner Längserstreckung verschiebbar geführt, welches an seiner Unterseite die Ösen 16 aufweist. Die einzelnen Rohrstücke 44 sind über nicht näher dargestellte Schlauchleitungen untereinander sowie mit einer Pumpe zum Zuführen des Spritzmittels aus dem Behälter 2 verbunden. Durch die verschiebbare Führung der Rohrstücke 44 kann der effektive Abstand, den die Düsen vom Umleger 28 in horizontaler Richtung aufweisen vergrössert und verkleinert werden, so dass die mit den Düsen 16 erzielte Spritzwirkung optimal an die jeweilige Höhe der Pflanze 3 angepasst werden kann, d.h. bei noch jüngeren, niedrigeren Pflanzen 3, die auch durch den Umleger 28 noch nicht so stark umgelegt werden, wird ein kleinerer horizontaler Abstand der Düsen 16 vom Umleger 28 gewählt als bei älteren, bereits höher gewachsenen Pflanzen 3. Durch diese Einstellmöglichkeit der Düsen 16 in horizontaler Richtung ergeben sich eine weitere Steigerung der Effektivität des Spritzvorganges bzw. die Möglichkeit einer weiteren Reduzierung der Menge an eingesetztem Spritzmittel und damit verbunden auch eine weitere Kostenersparnis bzw. Reduzierung der Umweltbelastung. Die Verstellbarkeit der Düsen 16 in horizontaler Richtung ist in den Fig. 4 und 6 mit den Doppelpfeilen E angedeutet.

Wie die Fig. 4 weiterhin zeigt, sind der Ausleger 27 bzw. dessen Abschnitte 27', 27" und 27''' an der dem Schlepper 1 zugewendeten Vorderseite durch eine beispielsweise von einer Kunststofffolie gebildeten Wandung 45 verschlossen, die oben und unten an dem Hohlrohrprofil 29 bzw. an dem Rohrstück 28 gehalten ist. Eine weitere, der Wandung 45 entsprechende Wandung 46 ist (gegebenenfalls unter Verwendung eines zusätzlichen Versteifungsrahmens) an den Armen 40 jedes Abschnittes 27', 27" bzw. 27''' vorgesehen, und zwar derart, dass diese Wandung 46 bei hochgeklappten Armen 40 in einer horizontalen Ebene oberhalb der Arme 40 bzw. der an dem Rohrstück 44 vorgesehenen Düsen 16 liegt. Durch die Wandungen 45 und 46 ergibt sich zunächst ein Windschutz in horizontaler und vertikaler Richtung mit dem Vorteil, dass das aus den Düsen 16 austretende Spritzmittel gegen ein Vertragen durch den Wind weitestgehend geschützt ist, also im wesentlichen dorthin gelangt, wo dieses Spritzmittel tatsächlich erforderlich ist. Dies führt ebenfalls dazu, dass mit einer wesentlich geringeren Menge an Spritzmittel die gewünschte Wirkung erreicht werden kann (Kostenersparnis und Reduzierung der Umweltbelastung). Die Wandungen 45 und 46 haben allerdings auch den Vorteil, dass nach dem Herunterklappen der Arme 40 die Düsen in den durch die Wandung 45 und 46 kofferartig ausgebildeten Abschnitten 27', 27" und 27''' gegen äussere Einflüsse geschützt sind, und zwar insbesondere auch bei zusammengeklappten Ausleger 27.

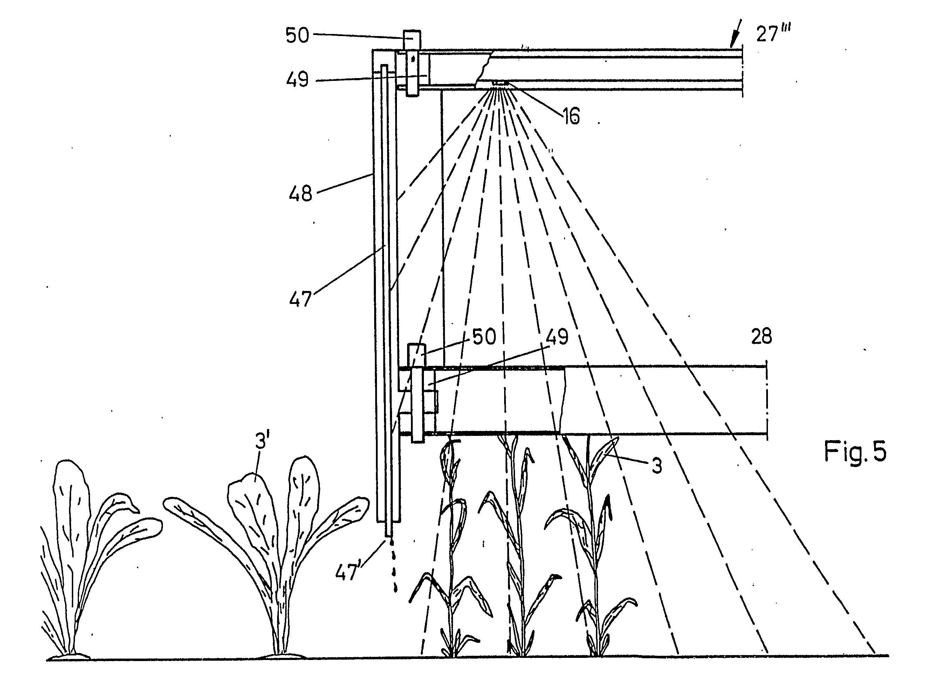

Wie die Fig. 5 zeigt, sind an den beiden Enden des Auslegers 27 zwei weitere Wandungen 47 vorgesehen, die mit ihren Oberflächenseiten jeweils senkrecht zu der Längserstreckung des Auslegers 27 liegen und mit ihrer unteren Kante 47' über das als Umleger dienende Rohrstück 28 nach unten reichen. Durch die Wandungen 47 wird zunächst verhindert, dass durch die an den beiden Enden des Auslegers 27 vorgesehenen Düsen 16 Spritzmittel auf eine Nachbarkultur bzw. auf die dortigen Pflanzen 3' gelangen kann, für die das verwendete Spritzmittel nicht geeignet ist bzw. die von dem für die Pflanzen 3 verwendeten Spritzmittel geschädigt werden könnten. Selbstverständlich bilden die Wandungen 47 auch einen zusätzlichen Windschutz. Bei der dargestellten Ausführungsform besteht jede Wandung 47, die über die im Schlepper 1 abgewendete Rückseite des Auslegers 27 fahnenartig wegsteht aus einem Rahmen 48, in dem eine die Wandung 47 bildende Kunststoffolie gehalten ist. Der Rahmen 48 weist an einer Rahmenseite zwei Ansätze 49 auf, die in das Hohlprofil 29 bzw. in das Rohrstück 28 an dem jeweiligen Ende des Auslegers 27 einführbar und dort mit Hilfe von Bolzen 50 festlegbar sind. Vor dem Zusammenklappen des Auslegers 27 werden die Wandungen 47 bzw. die Rahmen 48 von den Enden dieses Auslegers abgenommen.

Die Erfindung wurde voranstehend an Ausführungsbeispielen beschrieben. Es versteht sich, dass Änderungen sowie Abwandlungen möglich sind, ohne dass dadurch der der Erfindung zugrundeliegende Erfindungsgedanke verlassen wird. So ist es beispielsweise bei der in den Fig. 4-6 dargestellten Ausführungsform auch möglich, zusätzlich zu den Wandungen 45, 46 und 47 eine weitere Wandung, beispielsweise in Form eines losen Lappens aus Kunststoff oder anderem geeignetem Material auch an der Rückseite des Auslegers 27, d.h. an dem freien Ende der Arme 40 vorzusehen, wie dies in der Fig. 4 bei 51 mit unterbrochenen Linien angedeutet ist, um so einen vollständigen, rundherum wirksamen Windschutz zu erreichen.

**Patentansprüche**

1. Spritzvorrichtung zum Ausbringen von flüssigen Spritzmitteln, z.B. von Düngemitteln und/oder Unkrautvernichtungsmitteln und/oder Pflanzenschutzmitteln auf Kulturen hochständiger Pflanzen, bestehend aus einem an einem Fahrzeug (1) befestigbaren Spritzenträger (6) sowie aus einem am Spritzenträger einstellbar gehalterten horizontalen, sich senkrecht zur Fahrtrichtung des Fahrzeugs erstreckenden, ein Spritzengestänge bildenden Ausleger (27) mit einer Vielzahl von an diesem Ausleger (27) vorgesehenen Düsen (16), deren Austrittsöffnungen mit ihren die Düsenrichtung bestimmenden Achsen bei Gebrauch der Vorrichtung senkrecht oder in etwa senkrecht nach unten gerichtet sind, wobei eine über die Düsen (16) in Düsenrichtung nach unten vorstehende Umlegerkante (19) vorgesehen ist, die sich über die Länge des Auslegers (27) und dabei ebenfalls quer bzw. senkrecht zur Fahrtrichtung des Fahrzeuges (1) erstreckt und in Fahrtrichtung des Fahrzeuges (1) vor den Düsen (16) angeordnet ist, gekennzeichnet durch eine erste Wandung (45), die am Ausleger (27) an seiner in Fahrtrichtung des Fahrzeuges vor den Düsen (16) liegenden Seite vorgesehen ist.

2. Spritzvorrichtung nach Anspruch 1, dadurch gekennzeichnet, dass der für den Nichtgebrauch zusammenklappbare Ausleger (27) aus mehreren gelenkig miteinander verbundenen Abschnitten (27', 27", 27''') besteht, und dass die Düsen (16) sowie eine beim Gebrauch der Vorrichtung über den Düsen (16) angeordnete zweite Wandung (46) an Elementen (40) befestigt sind, die um eine Achse (41) parallel zur Längserstreckung des Auslegers (27) an dessen Abschnitten (27', 27", 27''') angelenkt sind, so dass für den Nichtgebrauch der Vorrichtung die Düsen (16) zusammen mit der zweiten Wandung (46) auf den zugehörigen Abschnitt (17', 17", 17''') geklappt werden können.

3. Spritzvorrichtung nach Anspruch 2, dadurch gekennzeichnet, dass die Abschnitte (27', 27", 27''') des Auslegers (27) jeweils fachwerkartig mit einem oberen und einem unteren, von einem Rohrstück (28, 29) gebildeten Gurt ausgebildet sind, und dass beim Gebrauch der Vorrichtung die unteren Gurte (28) die Umlegerkante bilden.

4. Spritzvorrichtung nach Anspruch 1, dadurch gekennzeichnet, dass bei einem Ausleger, der aus mehreren über Gelenke miteinander verbundenen Abschnitten besteht, ein die Umlegerkante bildendes Element (18, 28) ebenfalls aus mehreren Abschnitten (18') besteht, die jeweils im Bereich der Gelenke enden und dort durch schwenkbare oder eleastische Verbindungsstücke miteinander verbunden sind.

5. Spritzvorrichtung nach einem der Ansprüche 1-4, dadurch gekennzeichnet, dass die Düsen (16) in Richtung senkrecht zur Längserstreckung des Auslegers (27) einstellbar an diesem Ausleger (27) vorgesehen sind.

6. Spritzvorrichtung nach einem der Ansprüche 1–5, dadurch gekennzeichnet, dass der Ausleger (27) an wenigstens einem Ende eine dritte, quer bzw. senkrecht zur Längserstreckung des Auslegers (27) liegende Wandung (47) aufweist.

7. Spritzvorrichtung nach einem der Ansprüche 1–6, dadurch gekennzeichnet, dass mindestens ein Teil des Auslegers gegen die Wirkung einer Feder um eine vertikale Achse (30) schwenkbar ist.

## Claims

1. A spraying apparatus for discharging liquid sprays, e.g. fertilizers and/or weed killers and/or pesticides to cultures of high-standing plants, comprising a spray support (6), which can be securd to a vehicle (1), and a horizontal arm (27), which is adjustably mounted on the spray support and extends at right angle to the direction of travel of the vehicle and which forms a spray rod system and has a plurality of nozzles (16) which are provided on the said arm (27) and the discharge openings of which are directed vertically or approximately vertically downwards with their axes determining the nozzle direction when the apparatus is in use, a turning-over edge (18) being provided which projects downwards beyond the nozzles (16) in the direction of the nozzles and which extends over the length of the arm( 27) and likewise transversely or at right angles to the direction of travel of the vehicle (1) and is arranged in front of the nozzles (16) in the direction of travel of the vehicle (1), characterized by a first wall (45) which is provided on the arm (27) on its side in front of the nozzles (16) in the direction of travel of the vehicle.

2. A spraying apparatus according to Claim 1, characterized in that the arm (27) which can be folded together when not in use comprises a plurality of portions (27′, 27″, 27‴) joined together in an articulated manner, and the nozzles (16) and a second wall (46) arranged above the nozzles (16) when the apparatus is use are secured to elements (40) which are articulated on the portions (27′, 27″, 27‴) of the arm (27) about a shaft (41) parallel to the longitudinal extension of the said arm (27), so that the nozzles (16) together with the second wall (46) can be folded onto the associated portion (27′, 27″, 27‴) when the apparatus is not in use.

3. A spraying apparatus according to Claim 2, characterized in that the portions (27′, 27″, 27‴) of the arm (27) are constructed in each case as a framework with an upper and a lower boom formed by a tube member (28, 29), and when the apparatus is in use the lower boom (28) can form the turning-over edge.

4. A spraying apparatus according to Claim 1, characterized in that in the case of an arm which comprises a plurality of portions connectd together by way of joints an element (18, 28) forming the turning-over edge likewise comprises a plurality of portions (18′) which terminate in each case in the region of the joints and are connected together there by pivotable or resilient connexion rods.

5. A spraying apparatus according to any one of Claim 1 to 4, characterized in that the nozzles (16) are provided on the arm (27) so as to be adjustable in a direction at right angles to the longitudinal extension of the said arm (27).

6. A spraying apparatus according to any one of Claims 1 to 5, characterized in that the arm (27) is provided on at least one end with a third wall (47) positioned transversely or at right angles to the longitudinal extension of the arm (27).

7. A spraying apparatus according to any one of Claims 1 to 6, characterized in that at least part of the arm is pivotable about a vertical shaft (30) against the action of a spring.

## Revendications

1. Pulvérisateur pour l'application de liquides de pulvérisation, par exemple d'engrais et/ou d'herbicides et/ou de produits protecteurs pour plantes, sur des cultures de plantes poussant en hauteur, constitué d'un support de pulvérisateur (6) pouvant être fixé sur un véhicule (1) ainsi que d'un bras horizontal (27), disposé perpendiculairement à la direction de marche du véhicule, fixé de manière réglable sur le support du pulvérisateur, formant une tringlerie avec une multiplicité de buses (16) prévues sur ce bras (27), buses dont les ouvertures de sortie sont dirigées verticalement ou approximativement verticalement vers le bas avec leurs axes déterminant la direction des buses, lors de l'utilisation du pulvérisateur, un bord de rabattement (19) faisant saillie vers le bas au-delà des buses (16), dans la même direction que les buses, étant prévu, ce bord s'étendant sur la longueur du bras (27) et aussi transversalement ou perpendiculairement à la direction de marche du véhicule (1) et étant disposé devant les buses (16) en direction de marche du véhicule (1), caractérisé par une première paroi (45) qui est prévue au bras (27) à son côté se trouvant devant les buses (16) en direction de marché du véhicule.

2. Pulvérisateur selon la revendication 1 caractérisé en ce que le bras (27) repliable pour la non-utilisation est constitué de plusieurs sections (27′, 27″, 27‴) articulées l'une sur l'autre et les buses (16) ainsi qu'une deuxième paroi (46) disposée au-dessus des buses (16) lors de l'utilisation du pulvérisateur sont fixées sur des éléments (40) qui sont pivotables autour d'une axe (41) parallèle au sens longitudinal du bras (27) sur ses sections (27′, 27″, 27‴) de sorte que, pour la non-utilisation du dispositif, les buses (16) puissent être repliées ensemble avec la deuxième paroi (46) sur la section correspondante (27′, 27″, 27‴).

3. Pulvérisateur selon la revendication 2 caractérisé en ce que les sections (27′, 27″, 27‴) du bras (27) sont réalisées avec une charpente avec une membrure supérieure et une membrure inférieure formées par des pièces tubulaires (28, 29) et les membrures inférieures (28) forment le bord de rabattement lors de l'utilisation du dispositif.

4. Pulvérisateur selon la revendication 1 caractérisé en ce que dans un bras constitué de plusieurs sections reliées ensemble par des articulations, un élément (18, 28) formant le bord de rabattemment est également constitué de plusieurs sections (18′) qui ont chacune leur extrémité dans la région des articulations et y sont reliées ensemble par des pièces de raccord pivotables ou élastiques.

5. Pulvérisateur selon l'une des revendications 1 à 4 caractérisé en ce que les buses (16) sont prévues réglables sur le bras (27) en direction perpendiculaire à l'étendue longitudinale de ce bras (27).

6. Pulvérisateur selon l'une des revendications 1 à 5 caractérisé en ce que le bras (27) comporte à au moins une extrémité une troisième paroi (47) disposée tranversalement ou perpendiculairement à l'étendue longitudinale du bras (27).

7. Pulvérisateur selon l'une des revendications 1 à 6 caractérisé en ce qu'une partie au moins du bras précité est pivotable autour d'un axe vertical (30) à l'encontre de l'action d'un ressort.

Fig.1

Fig. 2

EP 0 163 154 B1

Fig 3

Fig. 4

Fig. 5

EP 0 163 154 B1

Fig. 6